Europäisches Patentamt

European Patent Office

Office européen des brevets

(19)

(11) Numéro de publication: **0 028 184**
**B1**

(12) **FASCICULE DE BREVET EUROPEEN**

(45) Date de publication du fascicule du brevet: **14.12.83**

(51) Int. Cl.³: **B 60 R 5/04**

(21) Numéro de dépôt: **80401472.8**

(22) Date de dépôt: **16.10.80**

(54) **Dispositif d'escamotage pour tablette de rangement.**

(30) Priorité: **24.10.79 FR 7926433**

(43) Date de publication de la demande:
**06.05.81 Bulletin 81/18**

(45) Mention de la délivrance du brevet:
**14.12.83 Bulletin 83/50**

(84) Etats contractants désignés:
**DE GB IT**

(56) Documents cités:
**FR - A - 1 334 445**
**FR - A - 2 307 678**
**FR - A - 2 364 787**
**GB - A - 1 142 624**

(73) Titulaire: **SOCIETE ANONYME AUTOMOBILES CITROEN**
**117 à 167, Quai André Citroen**
**F-75747 Paris Cedex 15 (FR)**

(73) Titulaire: **AUTOMOBILES PEUGEOT**
**75, avenue de la Grande Armée**
**F-75116 Paris (FR)**

(72) Inventeur: **Lalanne, André Pierre**
**20, Avenue de Dampierre**
**F-78320 le Mesnil-St-Denis (FR)**

(74) Mandataire: **Fabien, Henri et al,**
**PEUGEOT SA. DAT / BPI 18, rue des Fauvelles**
**F-92250 La Garenne-Colombes (FR)**

Courier Press, Leamington Spa, England.

### Dispositif d'escamotage pour tablette de rangement

L'invention concerne un dispositif d'escamotage pour tablette de rangement, et particulièrement pour plage arrière de véhicule accouplée à un panneau mobile relevable tel qu'un hayon, escamotage assurant le dégagement de la zone supérieure du coffre à bagages.

Il est connu d'utiliser certaines techniques de liaison entre tablette et panneau de telle sorte que le dégagement en zone supérieure du coffre à bagages soit en mesure d'assurer concomitamment l'amélioration des conditions d'accès extérieur pour les chargements et déchargements, éventuellement l'augmentation du volume disponible dudit coffre, une possibilité d'accès par l'intérieur depuis l'habitacle.

Exploitant des cinématiques complexes au moyen d'articulations et de rappels onéreux ou fragiles, l'art antérieur ne satisfait qu'imparfaitement les exigences des objectifs, certains problèmes, tels qu'en particulier celui du débattement interne (limité par les structures d'habitacles) ne sont résolus que par le biais d'une fragmentation de tablette autorisant les dégagements mais réduisant de façon notable l'orifice d'accès au coffre à bagages ou imposant l'emploi de segments latéraux amovibles dont la manipulation s'avère peu pratique et génératrice de pertes de temps.

L'invention entend particulièrement résoudre ce problème, et offrir divers autres avantages tels qu'un escamotage intégral de la tablette, en exploitant une nouvelle géométrie de débattement. Par rapport aux dispositifs connus d'escamotage pour tablette de rangement, et particulièrement pour plage arrière de véhicule accouplée à un panneau mobile relevable par rapport à une structure, tel qu'un hayon, l'invention est caractérisée par une articulation directe du bord arrière de la tablette sur le panneau mobile, le bord avant de la tablette — étant accouplé à un point fixe de la structure supportant le panneau par l'intermédiaire d'un élément souple traversant un palier intermédiaire solidaire dudit panneau, l'élément souple se trouvant contraint de coulisser à l'intérieur dudit palier pendant tout, ou partie, du débattement du panneau mobile.

Suivant une autre caractéristique de l'invention, un élément de butée est disposé sur l'élément souple, entre l'extrémité fixée à la structure et le palier intermédiaire, de telle sorte qu'en position rabattue du panneau mobile, et au contact du palier intermédiaire, il entretienne un équilibre de tension sur le segment de l'élément souple compris entre ledit palier intermédiaire et le point de fixation sur la tablette, et un état de détente au niveau du segment d'élément souple compris entre le palier intermédiaire et le point de fixation sur la structure.

L'invention sera mieux comprise et d'autres caractéristiques apparaîtront à la lecture de la description qui va suivre et à l'examen des figures représentant les différentes phases de la cinématique d'escamotage de la tablette au cours du relevage du panneau mobile, en l'occurence un hayon arrière de véhicule.

La figure 1 est une élévation schématique de l'attelage en question pour une position "fermeture" dudit hayon arrière.

La figure 2 est une élévation schématique du même ensemble pour une position intermédiaire d'ouverture dudit hayon.

La figure 3 est également l'élévation schématique du dispositif en position de relevage maximal du hayon arrière.

Le dispositif se compose des éléments suivants:

a) un panneau de hayon 1 pivotant autour d'une articulation haut 2 solidaire d'une structure 3 (carrosserie de véhicule en l'occurence).

b) une tablette 4 articulée horizontalement sur le hayon au niveau de son bord arrière.

c) un élément souple 5 transant un palier intermédiaire de coulissement 6 solidaire du hayon 1, élément dont une extrémité se trouve fixée en un point 7 de la structure 3, l'extrémité opposée étant attelée à la tablette 4 au niveau de son bord avant 11.

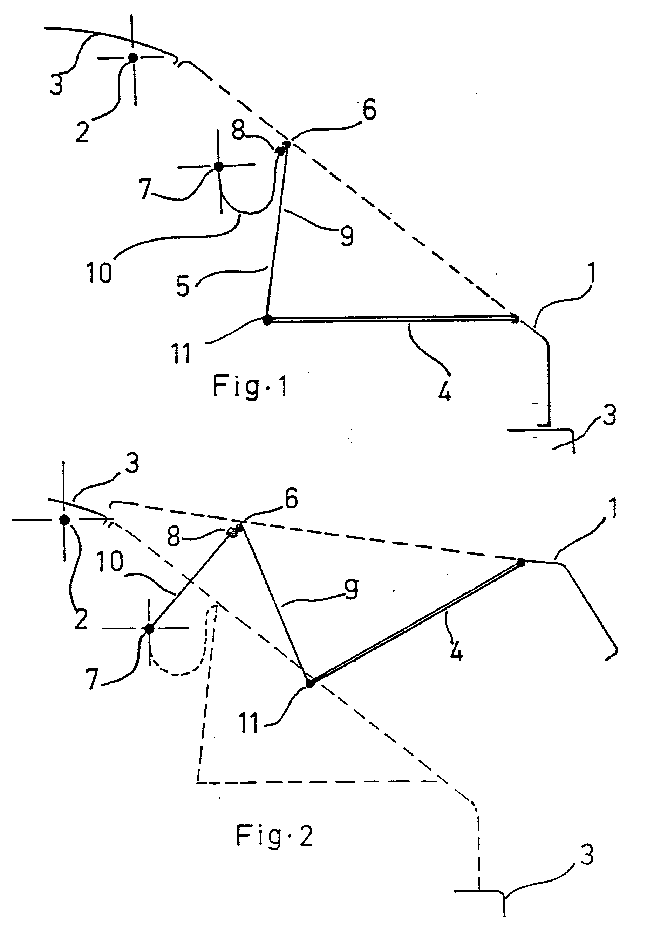

d) une butée 8 disposée sur l'élément souple 5, entre le palier intermédiaire 6 et le point 7 de fixation sur la strcuture 3, de telle sorte qu'elle entretienne en position de fermeture (figure 1) et par le biais de son arrêt d'appui au niveau du palier 6; d'une part un équilibre de tension sur le segment 9 s'étendant entre le palier 6 et le bord avant 11 de la tablette 4, d'autre part un état de détente sur le segment 10 compris entre ledit palier 6 et la fixation 7, disposition ayant pour effet de créer un surdimentionnement de la longueur du segment 10 par rapport à la distance existante entre le point de fixation 7 et le palier 6, surdimentionnement générateur d'un "mou" au niveau dudit segment 10.

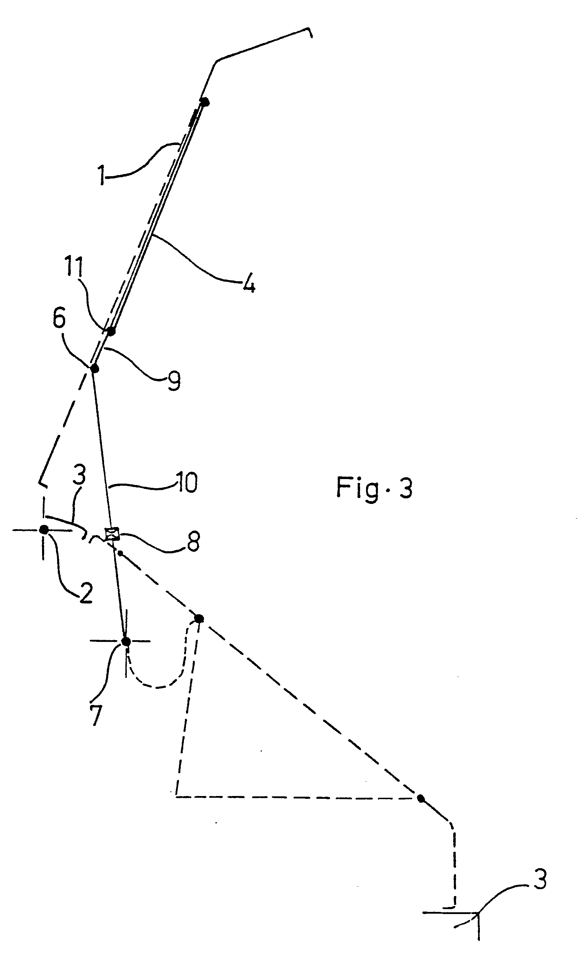

Il va de soi que le relèvement du panneau mobile 1 aura pour effet, dans une première phase de débattement aboutissant à un état d'entrebaillement illustré figure 2, de provoquer le déploiement du segment 10 par accroissement de l'écart existant entre le point de fixation 7 et le palier 6, accroissement générateur d'une tension "fin de course" matérialisée figure 2. A partir de cette position intermédiaire, les deux segments 9 et 10 de l'élément souple 5 sont tendus et la tablette 4 avantageusement dégagée de la structure d'habitacle. Une poursuite du relevage entrainera l'accroissement de l'écart existant entre ledit point fixe 7 et le palier 6, solidaire du panneau mobile 1, provoquant le coulissement de l'élément souple 5 à l'intérieur du palier 6 et l'escamotage total de la tablette 4 qui vient s'appliquer contre le panneau 1 (fig. 3).

A ce stade, l'escamotage total de la tablette 4 assure l'accessibilité au coffre, indifférement par l'intérieur ou l'extérieur du véhicule, en des conditions de dégagement optimales. Le fait d'obtenir un dégagement de la tablette par rapport à l'habitacle permet d'échapper à l'asservissement d'un débattement tributaire de la géométrie de structure et l'emploi d'une tablette à grande surface.

Il va de soi que l'invention ne saurait se limiter au mode de réalisation décrit,

les moyens d'attelage présentement définis pourraient être mis en oeuvre, soit unitairement en zone centraie ou latérale de tablette, soit de façon multiple, telle qu'une disposition bilatérale sur chaque flanc de la tablette.

Il est aussi possible d'envisager le cas d'une variante suivant laquelle la tablette 4, en position d'escamotage, pourrait être rendue provisoirement solidaire du panneau mobile 1 et maintenue plaguée contre ce dernier au moyen d'un dispositif d'attache rapide indépendamment de la position occupée par ledit panneau, la géométrie précédemment décrite s'accommodant, en effet, particulièrement d'un tel agencement.

La réalisation d'une tablette en un matériau trnsparent ou ajouré peut également être envisagée dans le cadre de l'invention.

## Revendications

1. Dispositif d'escamotage pour tablette de rangement, et particuliérement pour plage arrière (4) de véhicule accouplée à un panneau mobile relevable par rapport à une structure (3), tel qu'un hayon (1), caractérisé en ce que la tablette (4) est, au niveau de son bord arrière, directement articulée sur le panneau mobile (1) et au niveau de son bord avant (11) accouplée par un élément souple (5) à un point fixe (7) de la structure (3) supportant le panneau (1), l'élément souple (5) traversant un palier intermédiaire (6) solidaire dudit panneau (1), l'élément souple (5) se trouvant contraint de coulisser à l'intérieur dudit palier (6) pendant tout, ou partie, du débattement dudit panneau mobile (1).

2. Dispositif d'escamotage selon la revendication 1, caractérisé en ce qu'un organe de butée (8) se trouve interposé sur l'élément souple (5) entre le point de fixcation (7) de ce dernier sur la structure (3) et le palier intermédiaire (6) solidaire du panneau mobile (1).

3. Dispositif d'escamotage selon la revendication 2, caractérisé en ce qu l'organe de butée (8) est disposé de telle sorte sur l'élément souple (5) qu'en position rabattue du panneau mobile (1), et au contact du palier intermédiaire (6), il entretienne un équilibre de tension sur le segment (9) de l'élément souple (5) compris entre le palier intermédiaire (6) et le point de fixation (11) sur la tablette et, un état de détente, au niveau du segment (10) d'élément souple (5) compris entre le palier intermédiaire (6) et le point de fixation (7) sur la structure (3).

4. Dispositif d'escamotage selon l'une quel-conque des revendications précédentes, carac-térisé en ce que l'attelage décrit est disposé bi-latéralement sur chaque flanc de la tablette (4).

5. Dispositif d'escamotage selon l'une quelconque des revendications précédentes, caractérisé en ce qu'un moyen d'attache rapide peut rendre provisoirement solidaire du panneau (1) la tablette (4) plaquée en position d'escamotage indépendamment de la position occupée par ledit panneau (1).

6. Dispositif d'escamotage selon l'une quelconque des revendications précédentes, caractérisé en ce que la tablette (4) est constituée d'un matériau transparent.

7. Dispositif d'escamotage selon l'une quelconque des revendications précédentes, caractérisé en ce que la tablette (4) est ajourée.

## Claims

1. A retracting device for a partitioning panel and in particular for the rear parcel shelf (4) of a vehicle coupled to a movable panel which is liftable with respect to a structure (3), such as a tailgate (1), characterised in that the shelf (4) is hinged directly in the area of its rear edge to the movable panel (1) and is coupled in the area of its front edge (11) via a pliable element (5) to a fixed point (7) of the structure (3) supporting the panel (1), the pliable element (5) passing through an intermediate bearer (6) in unit with the said panel (1), the pliable element (5) being forced to slide within the said bearer (6) during all or part of the displacement of the said movable panel (1).

2. A retraction device according to claim 1, characterised in that a stop element (8) is interposed on the pliable element (5) between the fastening point (7) of this latter on the structure (3) and the intermediate bearer (6) in unit with the movable panel (1).

3. A retraction device according to claim 2, characterised in that the stop element (8) is so arranged on the pliable element (5) that in the lowered position of the movable panel (1), and in contact with the intermediate bearer (6), it maintains a tensional balance on the segment (9) of the pliable element (5) comprised between the intermediate bearer (6) and the fastening point (11) on the shelf, and an unstressed condition abreast of the segment (10) of the flexible element (5) comprised between the intermediate bearer (6) and the fastening point (7) on the structure (3).

4. A retraction device according to any one of the preceding claims, characterized in that the linkage described is arranged at either side of the shelf (4).

5. A retraction device according to any one of the preceding claims, characterised in that the shelf (4) applied in the position of retraction may be attached provisionally to the panel (1) by quick-action securing means, notwithstanding the position assumed by the said panel (1).

6. A retraction device according to any one of the preceding claims, characterised in that the shelf (4) is formed from a transparent material.

7. A retraction device according to any one of the preceding claims, characterised in that the shelf (4) has excisions.

**Patentansprüche**

1. Einziehvorrichtung für eine Ablageplatte, insbesondere für ein Fahrzeughinterteil (4), die mit einer beweglichen, gegenüber einem Aufbau (3) anhebbaren Wand, etwa einer Rückwandtür (1), verbunden ist, dadurch gekennzeichnet, daß die Ablageplatte (4) an ihrem hinteren Rand unmittelbar an der beweglichen Wand (1) angelenkt und an ihrem vorderen Rand (11) über ein biegsames Element (5) mit einem festen Punkt (7) des die Wand (1) tragenden Aufbaus (3) verbunden ist, wobei das biegsame Element (5) ein Zwischenlager (6) durchquert, das mit der Wand (1) fest verbunden ist, wobei das biegsame Element (5) gezwungen ist, sich während der gesamten oder teilweisen Hin- und Herbewegung der beweglichen Wand im Lager (6) zu bewegen.

2. Einziehvorrichtung nach Anspruch 1, dadurch gekennzeichnet, daß sich am biegsamen Element (5) zwischen dessen Befestigungspunkt (7) am Aufbau (3) und dem mit der beweglichen Wand (1) fest verbundenen Zwischenlager (6) ein Anschlag (8) befindet.

3. Einviehvorrichtung nach Anspruch 2, dadurch gekennzeichnet, daß der Anschlag (8) am biegsamen Element (5) derart angeordnet ist, daß er in der heruntergeklappten Stellung der beweglichen Wand und in Berührung mit dem Zwischenlager (6) ein Spannungszustand am Abschnitt (9) des biegsamen Elements (5) zwischen dem Zwischenlager (6) und dem Befestigungspunkt (11) an der Ablageplatte und einen Entspannungszustand am Abschnitt (10) des biegsamen Elements (5) zwischen dem Zwischenlager (6) und dem Befestigungspunkt (7) am Aufbau (3) aufrechterhält.

4. Einziehvorrichtung nach einem der vorhergehenden Ansprüche, dadurch gekennzeichnet, daß die beschriebene Zugeinrichtung beidseitig an jeder Seite der Ablageplatte (4) angeordnet ist.

5. Einziehvorrichtung nach einem der vorhergehenden Ansprüche, dadurch gekennzeichnet, daß unabhängig von der von der Wand (1) eingenommenen Stellung eine Schnellbefestigungseinrichtung, die in der Einziehstellung angelegte Ablageplatte mit der Wand (1) provisorisch verbinden kann.

6. Einziehvorrichtung nach einem der vorhergehenden Ansprüche, dadurch gekennzeichnet, daß die Ablageplatte (4) aus einem durchscheinenden Material besteht.

7. Einziehvorrichtung nach einem der vorhergehenden Ansprüche, dadurch gekennzeichnet, daß die Ablageplatte (4) gelocht ist.

Fig·1

Fig·2

1

11

6

4

9

3

10

2

8

Fig · 3

7

3